# EUROPEAN PATENT SPECIFICATION

(11) **EP 3 116 205 B1**
(45) Date of publication and mention of the grant of the patent: **13.09.2017**
(21) Application number: 15176188.9
(22) Date of filing: 10.07.2015
(51) Int. Cl.: H04M 1/04, B60R 11/02, G06F 1/16

(54) **HOLDING DEVICE WITH COMBINED LOCKING AND EXTENSION-RETRACTION MECHANISM**
HALTEVORRICHTUNG MIT KOMBINIERTEM VERRIEGELUNGS- UND AUSFAHR-EINFAHRMECHANISMUS
DISPOSITIF DE MAINTIEN AVEC MÉCANISME DE VERROUILLAGE ET D'EXTENSION-RÉTRACTION COMBINÉ

(43) Date of publication of application: 11.01.2017
(73) Proprietor: Jabil Circuit, Inc., St. Petersburg, Florida 33716 (US)
(72) Inventor: Hren, Martin, 2000 Stockerau (AT)
(74) Representative: Schwarz & Partner Patentanwälte OG

(56) References cited:
- WO-A1-03/019803
- DE-B4-102011 115 562
- US-A1- 2002 030 970
- US-A1- 2006 172 557

## Description

The present invention relates to a holding device to hold an object, comprising a receptacle with a front end and a rear end provided to receive the object, first holding means at the front end of the receptacle, second holding means at the rear end of the receptacle, a first shape memory alloy wire and a second shape memory alloy wire being actuated by applying an electrical power to them, wherein the first shape memory alloy wire and the second shape memory alloy wire exhibit a defined length at temperatures beneath a transition temperature range, and a reduced contracted length at temperatures above the transition temperature range.

Holding devices providing the ability to hold, lock and release an object are known in the art. The applied holding, locking and extension mechanisms are usually based on rather complex mechanics driven by electric motors. Problems with these systems are that they need a certain footprint for their installation and that they produce noise while in use. In addition, rotating parts get contaminated easily and are thus vulnerable to malfunction or mechanical breakdown. Moreover, contamination with water may cause serious problems or even harm for a human user.

Document DE 10 2011 115 562 B4 discloses a holding device to secure objects of varying size and form in an automotive setting. The holding mechanism is based on an active material that is activated to further enable, cause, or retain a securing engagement between the fixture and one or more objects. Where holding is desired the active material has to change into a pre-memorized state which may be able to lock the object. Nonetheless, if the form of the object does not match accurately, the holding mechanism will not be effective. This may cause damage to sensitive electronic devices since they could be catapulted around, especially in a dynamic setting such as an automotive.

The aim of the invention is to provide a compact and durable holding device that can be used to hold and lock an object, and to extend and retract this object in an automated or semi-automated way.

This aim is achieved by providing the first shape memory alloy wire that is built to move the first holding means along a locking direction, wherein the first shape memory alloy wire is attached to the first holding means with its first end and to a first fixation with its second end, and wherein the first holding means are built to lock and unlock the object within the receptacle in a first retracted state of extension-retraction means, and providing the second shape memory alloy wire that is built to move the extension-retraction means at the front end of the receptacle along an extension-retraction direction, arranged essentially orthogonal to the locking direction, wherein the second shape memory alloy wire is attached to the extension-retraction means with its first end and to a second fixation with its second end, and wherein the extension-retraction means are provided and built to extend the object from the first retracted state of the extension-retraction means into a second extracted state of the extension-retraction means, and/or to retract the object from the second extracted state of the extension-retraction means into the first retracted state of the extension-retraction means.

Such a holding device comprises the advantage that it overcomes the disadvantages known in the art, such as for the case of applying an electric motor that is complex and costly, sensitive to environmental conditions, noisy, subject to wear, and requires substantial space. The combined locking and extension-retraction mechanisms aims to safely store and extend or retract a sensitive object, such as electronic equipment, and thereby use little electric energy and footprint. Thus, the holding device provides a discrete unlocked and a secure locked position of the object as well as a controlled extension-retraction mechanism.

Shape memory alloy based actuators operating mechanical devices are known from document US 2006/0172557 A1. This document discloses some basic mechanisms for closure latches and the like based on shape memory alloy wires, or so-called "muscle-wires", that are actuated by applying an electrical power directly to the wires. Thus, the muscle wire contracts or relaxes to produce an output motion, and may be attached to a moveable member, for example a slide or a lever, to transfer this output motion to the moveable member. Nonetheless, the revealed mechanisms do not enable to achieve the aim of the invention, particularly a combined locking and extension-retraction mechanism.

In a preferred embodiment of the invention the first holding means comprise a snap hook and first spring means. The extension-retraction means comprise a ram and second spring means. While the extension-retraction means are in their first retracted state, the first spring means are in their relaxed state and thereby pushing the snap hook into a cavity of the object along the locking direction. This has the advantage that the object is safely stored and locked within the receptacle without any need of activating the first shape memory alloy wire. In addition, the second spring means are in their compressed state and thereby pushing the ram towards the object along the extension-retraction direction. This has the advantage that the second shape memory alloy wire needs to retract or extend the ram along the extension-retraction direction only during an intended extension or retraction of the object. Thus, electric energy and wear of the mechanical parts is minimized.

Preferably the first shape memory alloy wire and the second shape memory alloy wire are made of an one-way shape memory alloy, in particular a nickel-titanium alloy, that exhibits a defined length at temperatures beneath a transition temperature range, and a reduced contracted length at temperatures above this transition temperature range. Hereby, the length of the first shape memory alloy wire and the second shape memory alloy wire can be adjusted by changing their temperature, respectively. The used one-way shape memory alloy enables a very high number of length changes without material fatigue or reduced accuracy in length contraction.

More preferably the first end and the second end of the first shape memory alloy wire and the first end and the second end of the second shape memory alloy wire are connected with either a positive or a negative pole of a flexible power supply line, respectively. The flexible power supply line itself is connected to a direct current power supply, wherein the direct current power supply is provided for being activated and de-activated by activation means. This has the advantage that the temperature, and therefore the length, of the of the first shape memory alloy wire and the second shape memory alloy wire can be changed simply and user-friendly, namely by activating and de-activating the direct current power supply. In addition, this has the advantage that the chronological sequence of the activation or deactivation of the first shape memory alloy wire and the second shape memory alloy wire can be exactly controlled in order to provide controlled and secure locking, unlocking, extension and retraction of the object.

In a further preferable embodiment of the invention the direct current power supply is built to output an adjustable direct current. The first shape memory alloy wire and the second shape memory alloy wire are built to adjust their contraction rate proportional to the rate of change of the amount of this provided direct current. Hereby, a controlled extraction and retraction of the ram, and consequently of the object, is enabled.

In another preferred embodiment of the invention the defined length of the first shape memory alloy wire and the second shape memory alloy wire is around the 20- to 25-fold of the contraction length of the first shape memory alloy wire and the second shape memory alloy wire. The first shape memory alloy wire and the second shape memory alloy wire may be guided around pulleys. This has the advantage that a compact design of the embodiment is facilitated.

Preferably the retraction of the object or the ram from the second extended state of the extension-retraction means to the first retracted state of the extension-retraction means is being executed automated by the second shape memory alloy wire, or semi-automated by a manual force by a user. This has the advantage that the possible application or usage solutions of the invention are improved and extended.

More preferably detection means are provided and built to detect whether the object or the ram is fully retracted in order to push the snap hook into the cavity of the object and lock it as soon as the object or the ram is fully retracted.

Further details and advantages of the holding device according to the invention will become more apparent in the following description and the accompanying drawings.
Figure 1 shows in a schematic view from below a first embodiment of a holding device according to the invention.
Figure 2 shows in a section view along the section A-A the holding device shown in figure 1.
Figure 3 and figure 4 show in a section view along the section B-B a detail of the holding device shown in figure 1.
Figure 5 and figure 6 show in a section view along the section C-C a detail of the holding device shown in figure 1, whereas for the sake of clarity the object is being omitted.
Figure 7 shows in a section view along the section B-B a detail of the holding device shown in figure 1.
Figures 8A and Figure 8B show in a perspective view from above a detail of the holding device shown in figure 1, whereas for the sake of clarity the object is being omitted.

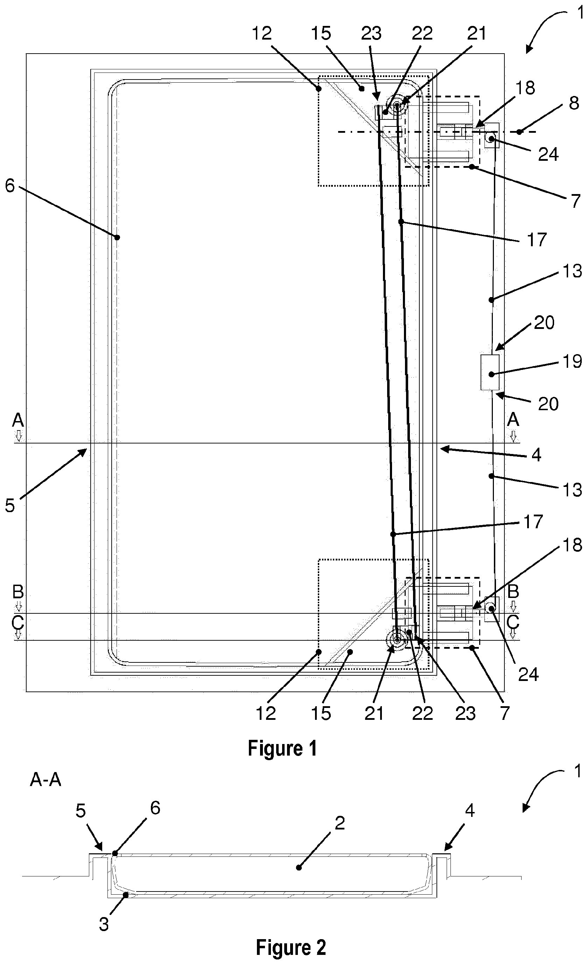

Figure 1 shows a holding device 1 according to a first embodiment of the invention, whereas figure 2 shows a section view along the section A-A of this holding device 1. In this holding device 1 an object 2 is received by a receptacle 3 that exhibits a front end 4 and a rear end 5. In the present example the object 2 can be an electronic device such as a tablet computer, a smart phone or a navigation system. At its rear end 5 the receptacle 3 exhibits an overhang that constitutes second holding means 6. At the front end 4 of the receptacle 3 two first holding means 7 are situated.

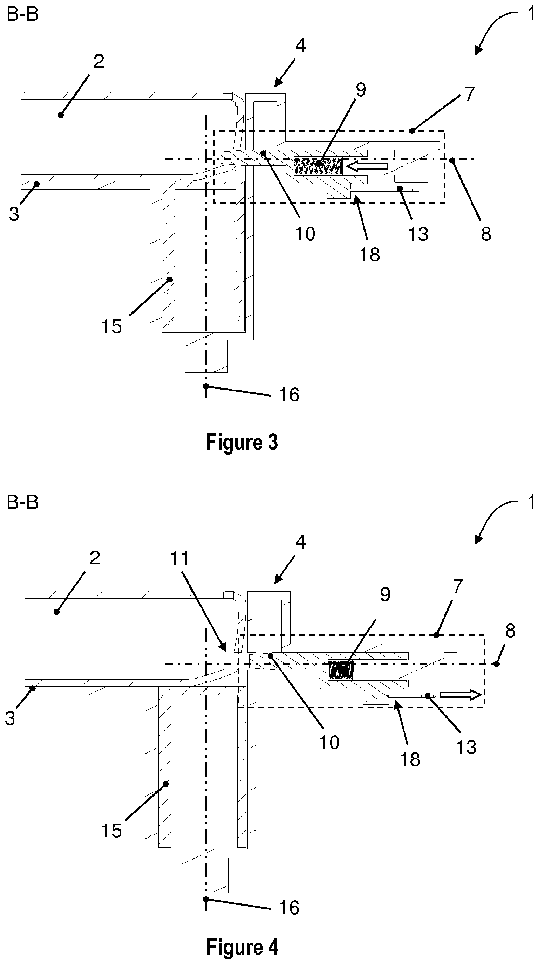

The first holding means 7 are moveable along a locking direction 8, as shown in figure 3 and figure 4, and comprise first spring means 9 and a snap hook 10. A first memory alloy wire 13 is connected to the first holding means 7 with its first end 18 and to a first fixation 19 with its second end 20.

In their relaxed state the first spring means 9 push the snap hook 10 along the locking direction 8 into a cavity 11 of the object 2. In this state the object 2 is locked inside the receptacle 3. This situation is represented in figure 3 and can be referred to as a first retracted state of extension-retraction means 12.

In their compressed state the first spring means 9 are retracted by the first shape memory alloy wire 13. As a consequence the snap hook 10 is retracted along the locking direction 8 out of the cavity 11 of the object 2 and into the casing of the receptacle 3. In this state the object 2 is unlocked from the receptacle 3. This situation is represented in figure 4 and can be referred to as a second extracted state of the extension-retraction means 12. If reference is made to times while the extension-retraction means 12 are in between their first retracted state and their second extended state, the situation is meant when the extension-retraction means 12 extend the object 2 from the first retracted state of the extension-retraction means 12 into the second extracted state of the extension-retraction means 12 or when the extension-retraction means 12 retract the object 2 from the second extracted state of the extension-retraction means 12 into the first retracted state of the extension-retraction means 12.

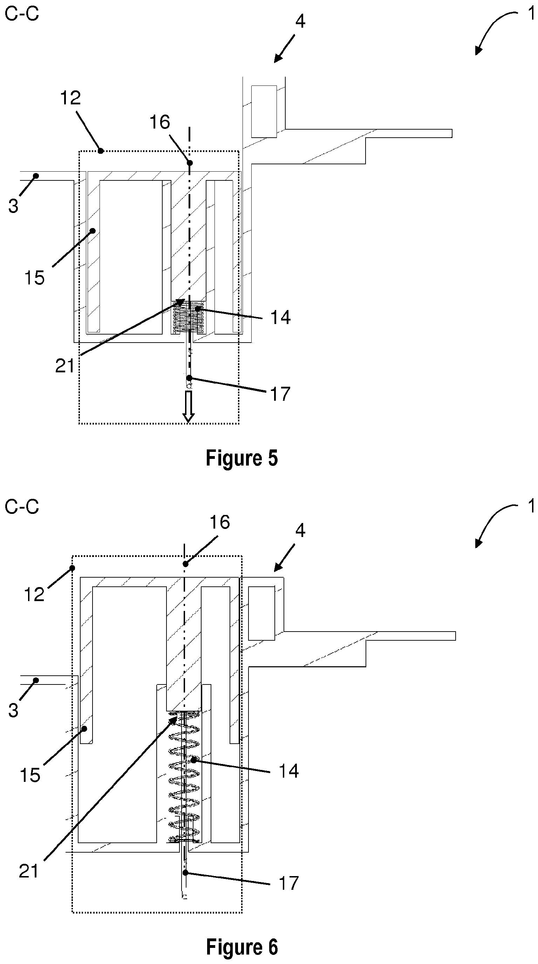

The extension-retraction means 12 are moveable along an extension-retraction direction 16, as shown in figures 5 and 6, and comprise a ram 15 and second spring means 14. A second memory alloy wire 17 is connected to the extension-retraction means 12 with its first end 21 and to a second fixation 22 with its second end 23.

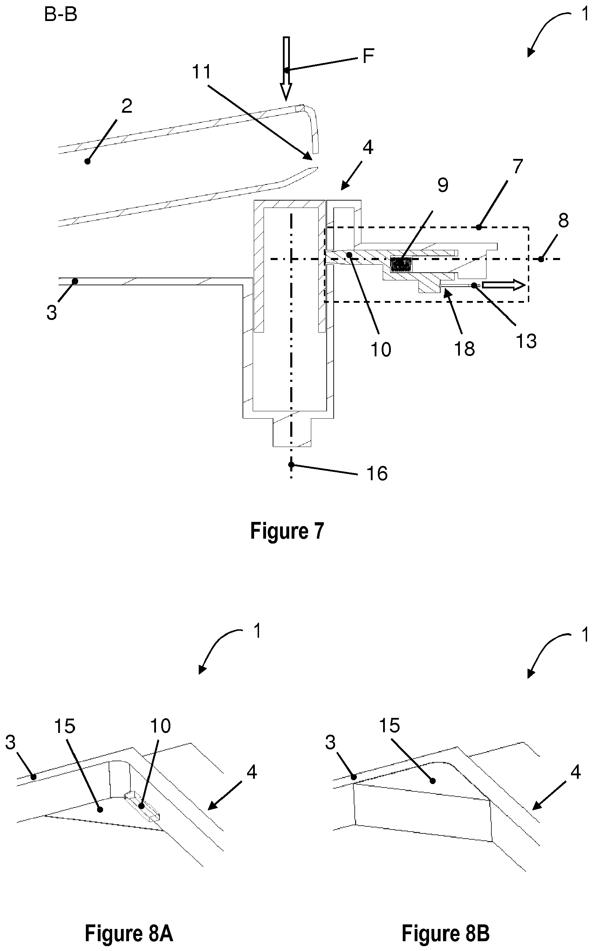

In their compressed state the second spring means 14 push the ram 15 along the extension-retraction direction 16 against the object 2. Nonetheless, the object 2 stays in its place since it is locked inside the receptacle 3 by the snap hook 10. This situation is represented in figure 5 and in figure 8A and can be referred to the first retracted state of the extension-retraction means 12.

In a relaxed state of the second spring means 14 the ram 15 is fully extracted. This is only feasible, if the snap hook 10 is retracted along the locking direction 8 out of the cavity 11 of the object 2, since only then the object 2 is unlocked from the receptacle 3. This situation is represented in figure 6 and in figure 8B and can be referred to the second extracted state of the extension-retraction means 12.

If a user activates the holding device 1 with a button not shown in the figures to unlock and extend the object 2, the extension-retraction means 12 change their state from their first retracted state, shown in figure 5, to their second extracted state, shown in figure 6. As a first step, the second spring means 14 are retracted into their compressed state by the second shape memory alloy wire 17. As a consequence the ram 15 is being held in its actual position. As a second step, the snap hook 10 is retracted by the first memory alloy wire 13 against the force of the first spring means 9 along the locking direction 8 out of the cavity 11 of the object 2 and into the casing of the receptacle 3.As a third step, the retraction of the second shape memory alloy wire 17 is being reduced in a controlled way. Thereby the ram 15 and the object 2 are moved upwards along the extension-retraction direction 16 until the second spring means 14 are in their relaxed state. The object 2 is now fully extracted, and may be taken out by the user.

If the user activates the holding device 1 with the button to retract and lock the object 2, the extension-retraction means 12 change their state from their second extracted state, shown in figure 6, into their first retracted state, shown in figure 5. As a first step, the snap hook 10 is retracted by the first memory alloy wire 13 and the first spring means 9 along the locking direction 8 out of the cavity 11 of the object 2 and into the casing of the receptacle 3. As a second step, the second spring means 14 are retracted by the second shape memory alloy wire 17 against the force of the second spring means 14 in a controlled way. As a consequence the ram 15 and the object 2 are moved downwards along the extension-retraction direction 16. As soon as the second spring means 14 are in their compressed state, as a third step the snap hook 10 is pushed into the cavity 11 of the object 2 by the first spring means 9. Consequently the object 2 is fully retracted and locked inside the receptacle 3.

Alternatively the user may manually push back the object 2 by a force F greater than the force of the second spring means 14 as shown in figure 7. Detection means, for example a toggle switch or a motion sensor, detect the object 2 being in its fully retracted state, and activation means activate the extension-retraction means 12 to hold back the ram 15 to prevent an unwanted extension of the object 2, and subsequently activate the first holding means 7 to push the snap hook 10 into the cavity 11 of the object 2. Consequently the object 2 is fully retracted and locked inside the receptacle 3.

Movement of the two first holding means 7 against the pretension of their first spring means 9 works by retracting the first end 18 of the first memory alloy wire 13. Movement of the extension-retraction means 12 against the pretension of their second spring means 14 works by retracting the first end 21 of the second memory alloy wire 17. Retracting the first end 18 of the first memory alloy wire 13 and the first end 21 of the second memory alloy wire 17 works by contracting the first memory alloy wire 13 and the second memory alloy wire 17, respectively.

In the present embodiment of the invention the first shape memory alloy wire 13 and the second shape memory alloy wire 17 are made of an one-way shape memory alloy, in particular a nickel-titanium alloy. This one-way shape memory alloy exhibits a defined length at temperatures beneath a transition temperature range, and a reduced contracted length at temperatures above the transition temperature range. The one-way shape memory alloy contracts by about two to five percent of the defined length above the transition temperature range, and relaxes back into its defined length below the transition temperature range. The transition temperature range of the one-way shape memory alloy lies in the range between 70 and 200 degrees Celsius. Hence, contraction of the respective first memory alloy wire 13 and the respective second memory alloy wire 17 is achieved by heating them above the transition temperature range, and relaxation is achieved by cooling them below the transition temperature range.

The defined length of the first shape memory alloy wire 13 and the second shape memory alloy wire 17 is around the 20- to 25-fold of the contraction length of the first shape memory alloy wire 13 and the second shape memory alloy wire 17, respectively. To achieve a sufficient long contracted length the first shape memory alloy wire 13 and the second shape memory alloy wire 17 are guided around pulleys 24.

The first end 18 and the second end 20 of the first shape memory alloy wire 13 and the first end 21 and the second end 23 of the second shape memory alloy wire 17 are connected with either a positive or a negative pole of a flexible power supply line, respectively. The flexible power supply line is connected to a direct current power supply, wherein the direct current power supply is provided for being activated and de-activated by activation means, for example a button that is part of the holding device 1. By activating the direct current power supply, direct current is provided to the first shape memory alloy wire 13 and the second shape memory alloy wire 17. Due to the specific resistance of the shape memory alloy, the first shape memory alloy wire 13 and the second shape memory alloy wire 17 heat themselves up. As soon as their temperature is greater than the transition temperature range, the first shape memory alloy wire 13 and the second shape memory alloy wire 17 contract to their respective contraction length. When the direct current power supply is deactivated the first shape memory alloy wire 13 and the second shape memory alloy wire 17 cool down beneath the transition temperature range, causing them to relax back into their respective defined length.

The direct current power supply is built to output an adjustable direct current, wherein the first shape memory alloy wire 13 and the second shape memory alloy wire 17 adjust their respective contraction proportionate to this provided direct current. This enables to contract and relax the first shape memory alloy wire 13 and the second shape memory alloy wire 17 in a controlled manner. In turn the first holding means 7 and the extension-retraction means 12 can be retracted and extended in such a controlled manner. Hereby, the speed of the retraction and extension of the first holding means 7 and the extension-retraction means 12 may be adjusted by the rate of change of the amount of the direct current.

The activation means are built to control the direct current power supply and thus to control the contraction of the first shape memory alloy wire 13 and the second shape memory alloy wire 17. Hence, the extraction and the retraction of the snap hook 10 and the ram 15 can be controlled by the activation means.

If the object 2 needs to be unlocked and extended, firstly, the second shape memory alloy wire 17 is being activated. Secondly, the first shape memory alloy wire 13 is being activated. Thirdly, the direct current at the second shape memory alloy wire 17 is steadily reduced in order to relax the second shape memory alloy wire 17 in a controlled way. Fourthly, as soon as the ram 15 and the object 2 are fully extended the first shape memory alloy wire 13 and the second shape memory alloy wire 17 are being de-activated.

If the object 2 needs to be retracted and locked, firstly, the first shape memory alloy wire 13 is being activated. Secondly, the second shape memory alloy wire 17 is being activated, whereas the direct current at the second shape memory alloy wire 17 is steadily increased in order to retract the second shape memory alloy wire 17 in a controlled way. Thirdly, as soon as the ram 15 and the object 2 are fully retracted the first shape memory alloy wire 13 is being de-activated, and fourthly the second shape memory alloy wire 17 is being de-activated.

If the object 2 is being pushed into the receptacle 3 by a manual force F greater than the force of the second spring means 14 the activation means activate the first shape memory alloy wire 13. As soon as the ram 15 and the object 2 are fully retracted the second shape memory alloy wire 17 is being de-activated to prevent an unwanted extension of the object 2. Finally, the first shape memory alloy wire 13 is being de-activated.

It can be mentioned that the holding device 1 according to the invention can be applied to any object 2 of any form, whereas the receptacle 3 and/or the first holding means 7 and/or the second holding means 6 need to be compatible with the form of the object 2. The related method of the extension-retraction means 12 of the holding device 1 according to the invention can also be used to move and lock or unlock an object in other devices, such as for example a storage device, a transfer device, a lifting device, or a support device.

In addition it can be mentioned that the first shape memory alloy wire 13 and the second shape memory alloy wire 17 according to the invention can be made of any one-way shape memory alloy, which is commonly termed "muscle wire", and which exhibits a materials specific distinct transition temperature or distinct transition temperature range, or of any two-way shape memory alloy, which exhibits two different transition temperatures or two different transition temperature ranges, or of any magnetic shape memory alloy, which contracts or expands due to a magnetic effect. Such materials can be made of a nickel-titanium alloy, a nickel-titanium-copper alloy, a copper-zinc alloy, a copper-zinc-aluminum alloy, a copper-aluminum-nickel alloy, an iron-nickel-aluminum alloy, an iron-manganese-silicon alloy, or a zinc-copper-gold alloy. Depending on the material the respective contraction is the rangy of one to up to ten percent of the defined length, and the respective transition temperature/temperatures is/are in the range between minus 150 to 250 degrees Celsius.

## Claims

1. Holding device (1) to hold an object (2), comprising a receptacle (3) with a front end (4) and a rear end (5) provided to receive the object (2), first holding means (7) at the front end (4) of the receptacle (3), second holding means (6) at the rear end (5) of the receptacle (3), a first shape memory alloy wire (13) and a second shape memory alloy wire (17) being actuated by applying an electrical power to them, wherein the first shape memory alloy wire (13) and the second shape memory alloy wire (17) exhibit a defined length at temperatures beneath a transition temperature range, and a reduced contracted length at temperatures above the transition temperature range, **characterized in that**
- the first shape memory alloy wire (13) is provided and built to move the first holding means (7) along a locking direction (8), wherein the first shape memory alloy wire (13) is attached to the first holding means (7) with its first end (18) and to a first fixation (19) with its second end (20), and wherein the first holding means (7) are built to lock and unlock the object (2) within the receptacle (3) in a first retracted state of extension-retraction means (12),
- the second shape memory alloy wire (17) is provided and built to move the extension-retraction means (12) at the front end (4) of the receptacle (3) along an extension-retraction direction (16), arranged essentially orthogonal to the locking direction (8), wherein the second shape memory alloy wire (17) is attached to the extension-retraction means (12) with its first end (21) and to a second fixation (22) with its second end (23), and wherein the extension-retraction means (12) are provided and built to extend the object (2) from the first retracted state of the extension-retraction means (12) into a second extracted state of the extension-retraction means (12), and/or to retract the object (2) from the second extracted state of the extension-retraction means (12) into the first retracted state of the extension-retraction means (12).

2. Holding device (1) according to claim 1, **characterized in that** the first holding means (7) comprise a snap hook (10) and first spring means (9), which are built to push the snap hook (10) into a cavity (11) of the object (2) along the locking direction (8), and wherein the first shape memory alloy wire (13) is built to retract the snap hook (10) along the locking direction (8) while the extension-retraction means (12) are in between their first retracted state and their second extended state and the first spring means (9) are in between their relaxed state and their compressed state.

3. Holding device (1) according to claim 1 or 2, **characterized in that** the extension-retraction means (12) comprise a ram (15) and second spring means (14), which are built to push the ram (15) towards the object (2) along the extension-retraction direction (16), and wherein the second shape memory alloy wire (17) is built to retract the ram (15) along the extension-retraction direction (16) while the extension-retraction means (12) are in between their first retracted state and their second extended state and the second spring means (14) are in between their relaxed state and their compressed state.

4. Holding device (1) according to any of the claims 1 to 3, **characterized in that** the first shape memory alloy wire (13) and the second shape memory alloy wire (17) are made of an one-way shape memory alloy, in particular a nickel-titanium alloy, wherein a maximum contraction is about two to five percent of the defined length, and wherein the transition temperature range lies in the range between minus 150 and 250 degrees Celsius, preferably in the range between 140 and 200 degree Celsius, and more preferably in the range between 160 and 180 degree Celsius.

5. Holding device (1) according to any of the claims 1 to 4, **characterized in that** the first end (18) and the second end (20) of the first shape memory alloy wire (13) and the first end (21) and the second end (23) of the second shape memory alloy wire (17) are connected with either a positive or a negative pole of a flexible power supply line, respectively, wherein the flexible power supply line is connected to a direct current power supply and wherein activation means are provided and built to activate and de-activate the direct current power supply.

6. Holding device (1) according to claim 5, **characterized in that** the direct current power supply is built to output an adjustable direct current, wherein the first shape memory alloy wire (13) and the second shape memory alloy wire (17) are built to adjust their contraction proportionate to this provided direct current to enable a controlled extraction and retraction of the snap hook (10) and/or the ram (15).

7. Holding device (1) according to claims 5 or 6, **characterized in that** while the extension-retraction means (12) are moved from their first retracted state into their second extended state, the activation means are built to firstly activate the second shape memory alloy wire (17), secondly to activate the first shape memory alloy wire (13), thirdly to in particular steadily reduce the direct current at the second shape memory alloy wire (17) until the extension-retraction means (12) are in their second extended state, and fourthly to de-activate the first shape memory alloy wire (13) and the second shape memory alloy wire (17).

8. Holding device (1) according to claims 5 to 7, **characterized in that** while the extension-retraction means (12) are moved from their second extended state into their first retracted state, the activation means are built to firstly activate the first shape memory alloy wire (13), secondly to activate the second shape memory alloy wire (17), whereas the activation means are built to in particular steadily increase the direct current at the second shape memory alloy wire (17) until the extension-retraction means (12) are in their first retracted state, thirdly to de-activate the first shape memory alloy wire (13), and fourthly to de-activate the second shape memory alloy wire (17).

9. Holding device (1) according to any of the claims 1 to 8, **characterized in that** the defined length of the first shape memory alloy wire (13) and the second shape memory alloy wire (17) is around the 20- to 25-fold of their maximum contraction, respectively, wherein the first shape memory alloy wire (13) and/or the second shape memory alloy wire (17) are guided around pulleys (24).

10. Holding device (1) according to any of the claims 3 to 9, **characterized in that** in case a manual force (F) greater than the force of the second spring means (14) is provided the activation means are provided and built to activate the first shape memory alloy wire 13 to retract the snap hook (10) along the locking direction (8) while the extension-retraction means (12) are in between their second extended state and their first retracted state, and while the second spring means (14) are in between their relaxed state and their compressed state.

11. Holding device (1) according to claim 10, **characterized in that** detection means are provided and built to detect the second spring means (14) being in their compressed state during the retraction of the ram (15) by the manual force (F) and to activate the first spring means (9) to push the snap hook (10) into the cavity of the object (2) along the locking direction (8), wherein the second spring means (14) are in their compressed state.

12. Method to hold an object (2) with a holding device (1) **characterized in that** a holding device (1) according to any of the claims 1 to 11 is used which extends the object (2) from a receptacle (3) by extension-retraction means (12) from a first retracted state of the extension-retraction means (12) to a second extended state of the extension-retraction means (12), and/or retracts the object (2) into the receptacle (3) by the extension-retraction means (12) from the second extended state of the extension-retraction means (12) to the first retracted state of the extension-retraction means (12).

13. Method according to claim 12, **characterized in that** while the object (2) is extended from the receptacle (3) and the extension-retraction means (12) are moved from their first retracted state into their second extended state, the activation means firstly activate the second shape memory alloy wire (17), secondly activate the first shape memory alloy wire (13), thirdly steadily reduce the direct current at the second shape memory alloy wire (17) until the extension-retraction means (12) are in their second extended state, and fourthly de-activate the first memory alloy wire (13).

14. Method according to claim 12, **characterized in that** while the object (2) is retracted into the receptacle (3) and the extension-retraction means (12) are moved from their second extended state into their first retracted state, the activation means firstly activate the first shape memory alloy wire (13), secondly activate the second shape memory alloy wire (17), whereas the activation means steadily increase the direct current at the second shape memory alloy wire (17) until the extension-retraction means (12) are in their first retracted state, thirdly de-activate the first shape memory alloy wire (13), and fourthly de-activate the second shape memory alloy wire (17).

## Patentansprüche

1. Haltevorrichtung (1) zum Halten eines Gegenstands (2), umfassend einen Behälter (3) mit einem vorderen Ende (4) und einem hinteren Ende (5), der zur Aufnahme des Gegenstands (2) vorgesehen ist, erste Haltemittel (7) am vorderen Ende (4) des Behälters (3), zweite Haltemittel (6) am hinteren Ende (5) des Behälters (3), einen ersten Formgedächtnislegierungsdraht (13) und einen zweiten Formgedächtnislegierungsdraht (17), die betätigt werden, indem elektrischer Strom an sie angelegt wird, wobei der erste Formgedächtnislegierungsdraht (13) und der zweite Formgedächtnislegierungsdraht (17) eine definierte Länge bei Temperaturen unterhalb eines Übergangstemperaturbereichs und eine reduzierte geschrumpfte Länge bei Temperaturen oberhalb des Übergangstemperaturbereichs aufweisen, **dadurch gekennzeichnet, dass**
- der erste Formgedächtnislegierungsdraht (13) so vorgesehen und konstruiert ist, um das erste Haltemittel (7) entlang einer Verriegelungsrichtung (8) zu bewegen, wobei der erste Formgedächtnislegierungsdraht (13) mit seinem ersten Ende (18) an dem ersten Haltemittel (7) und mit seinem zweiten Ende (20) an einer ersten Fixierung (19) befestigt ist und wobei das erste Haltemittel (7) so konstruiert ist, um den Gegenstand (2) innerhalb des Behälters (3) in einem ersten zurückgezogenen Zustand von Auszieh-/Einziehmitteln (12) zu verriegeln und zu entriegeln,
- der zweite Formgedächtnislegierungsdraht (17) so vorgesehen und konstruiert ist, um die Auszieh-/Einziehmittel (12) am vorderen Ende (4) des Behälters (3) entlang einer Auszieh-/Einziehrichtung (16) zu bewegen, die im Wesentlichen orthogonal zur Verriegelungsrichtung (8) angeordnet ist, wobei der zweite Formgedächtnislegierungsdraht (17) mit seinem ersten Ende (21) an den Auszieh-/Einziehmitteln (12) und mit seinem zweiten Ende (23) an einer zweiten Fixierung (22) befestigt ist und wobei die Auszieh-/Einziehmittel (12) so vorgesehen und konstruiert sind, um den Gegenstand (2) aus dem ersten zurückgezogenen Zustand der Auszieh-/Einziehmittel (12) in einen zweiten herausgezogenen Zustand der Auszieh-/Einziehmittel (12) auszufahren und/oder den Gegenstand (2) aus dem zweiten herausgezogenen Zustand der Auszieh-/Einziehmittel (12) in den ersten zurückgezogenen Zustand der Auszieh-/Einziehmittel (12) zurückzuziehen.

2. Haltevorrichtung (1) gemäß Anspruch 1, **dadurch gekennzeichnet, dass** die ersten Haltemittel (7) einen Schnapphaken (10) und erste Federmittel (9) umfassen, die so konstruiert sind, um den Schnapphaken (10) entlang der Verriegelungsrichtung (8) in einen Hohlraum (11) des Gegenstands (2) zu drücken, und wobei der erste Formgedächtnislegierungsdraht (13) so konstruiert ist, um den Schnapphaken (10) entlang der Verriegelungsrichtung (8) zurückzuziehen, während die Auszieh-/Einziehmittel (12) sich zwischen ihrem ersten zurückgezogenen Zustand und ihrem zweiten ausgefahrenen Zustand befinden und die ersten Federmittel (9) sich zwischen ihrem entspannten Zustand und ihrem komprimierten Zustand befinden.

3. Haltevorrichtung (1) gemäß Anspruch 1 oder 2, **dadurch gekennzeichnet, dass** die Auszieh-/Einziehmittel (12) einen Stößel (15) und zweite Federmittel (14) umfassen, die so konstruiert sind, um den Stößel (15) entlang der Auszieh-/Einziehrichtung (16) zu dem Gegenstand (2) zu drücken, und wobei der zweite Formgedächtnislegierungsdraht (17) so konstruiert ist, um den Stößel (15) entlang der Auszieh-/Einziehrichtung (16) zurückzuziehen, während die Auszieh-/Einziehmittel (12) sich zwischen ihrem ersten zurückgezogenen Zustand und ihrem zweiten ausgefahrenen Zustand befinden und die zweiten Federmittel (14) sich zwischen ihrem entspannten Zustand und ihrem komprimierten Zustand befinden.

4. Haltevorrichtung (1) gemäß einem der Ansprüche 1 bis 3, **dadurch gekennzeichnet, dass** der erste Formgedächtnislegierungsdraht (13) und der zweite Formgedächtnislegierungsdraht (17) aus einer Einwegformgedächtnislegierung, insbesondere einer Nickel-Titan-Legierung, gefertigt sind, wobei eine maximale Kontraktion etwa zwei bis fünf Prozent der definierten Länge beträgt und wobei der Übergangstemperaturbereich im Bereich zwischen minus 150 und 250 Grad Celsius, vorzugsweise im Bereich zwischen 140 und 200 Grad Celsius und noch bevorzugter im Bereich zwischen 160 und 180 Grad Celsius liegt.

5. Haltevorrichtung (1) gemäß einem der Ansprüche 1 bis 4, **dadurch gekennzeichnet, dass** das erste Ende (18) und das zweite Ende (20) des ersten Formgedächtnislegierungsdrahts (13) und das erste Ende (21) und das zweite Ende (23) des zweiten Formgedächtnislegierungsdrahts (17) entweder mit einem positiven oder einem negativen Pol einer flexiblen Stromleitung verbunden sind, wobei die flexible Stromleitung mit einem Gleichstromnetzteil verbunden ist und wobei Aktivierungsmittel so vorgesehen und konstruiert sind, um das Gleichstromnetzteil zu aktivieren und zu deaktivieren.

6. Haltevorrichtung (1) gemäß Anspruch 5, **dadurch gekennzeichnet, dass** das Gleichstromnetzteil so konstruiert ist, um einen einstellbaren Gleichstrom auszugeben, wobei der erste Formgedächtnislegierungsdraht (13) und der zweite Formgedächtnislegierungsdraht (17) so konstruiert sind, um ihre Kontraktion proportional zu diesem bereitgestellten Gleichstrom einzustellen, um ein gesteuertes Herausziehen und Zurückziehen des Schnapphakens (10) und/oder des Stößels (15) zu ermöglichen.

7. Haltevorrichtung (1) gemäß Anspruch 5 oder 6, **dadurch gekennzeichnet, dass** die Aktivierungsmittel so konstruiert sind, um erstens den zweiten Formgedächtnislegierungsdraht (17) zu aktivieren, zweitens den ersten Formgedächtnislegierungsdraht (13) zu aktivieren, drittens insbesondere den Gleichstrom an dem zweiten Formgedächtnislegierungsdraht (17) stetig zu reduzieren, bis die Auszieh-/Einziehmittel (12) sich in ihrem zweiten ausgefahrenen Zustand befinden, und viertens den ersten Formgedächtnislegierungsdraht (13) und den zweiten Formgedächtnislegierungsdraht (17) zu deaktivieren, während die Auszieh-/Einziehmittel (12) aus ihrem ersten zurückgezogenen Zustand in ihren zweiten ausgefahrenen Zustand bewegt werden.

8. Haltevorrichtung (1) gemäß den Ansprüchen 5 bis 7, **dadurch gekennzeichnet, dass** die Aktivierungsmittel so konstruiert sind, um erstens den ersten Formgedächtnislegierungsdraht (13) zu aktivieren, zweitens den zweiten Formgedächtnislegierungsdraht (17) zu aktivieren, während die Aktivierungsmittel so konstruiert sind, um insbesondere den Gleichstrom an dem zweiten Formgedächtnislegierungsdraht (17) stetig zu reduzieren, bis die Auszieh-/Einziehmittel (12) sich in ihrem ersten zurückgezogenen Zustand befinden, drittens den ersten Formgedächtnislegierungsdraht (13) zu deaktivieren und viertens den zweiten Formgedächtnislegierungsdraht (17) zu deaktivieren, während die Auszieh-/Einziehmittel (12) aus ihrem zweiten ausgefahrenen Zustand in ihren ersten zurückgezogenen Zustand bewegt werden.

9. Haltevorrichtung (1) gemäß einem der Ansprüche 1 bis 8, **dadurch gekennzeichnet, dass** die definierte Länge des ersten Formgedächtnislegierungsdrahts (13) und des zweiten Formgedächtnislegierungsdrahts (17) jeweils etwa das 20- bis 25-Fache ihrer maximalen Kontraktion beträgt, wobei der erste Formgedächtnislegierungsdraht (13) und/oder der zweite Formgedächtnislegierungsdraht (17) um Riemenscheiben (24) herum geführt ist bzw. sind.

10. Haltevorrichtung (1) gemäß einem der Ansprüche 3 bis 9, **dadurch gekennzeichnet, dass** im Falle des Vorliegens einer manuellen Kraft (F), die stärker als die Kraft der zweiten Federmittel (14) ist, die Aktivierungsmittel so vorgesehen und konstruiert sind, um den ersten Formgedächtnislegierungsdraht 13 dazu zu aktivieren, den Schnapphaken (10) entlang der Verriegelungsrichtung (8) zurückzuziehen, während die Auszieh-/Einziehmittel (12) sich zwischen ihrem zweiten ausgefahrenen Zustand und ihrem ersten zurückgezogenen Zustand befinden und während die zweiten Federmittel (14) sich zwischen ihrem entspannten Zustand und ihrem komprimierten Zustand befinden.

11. Haltevorrichtung (1) gemäß Anspruch 10, **dadurch gekennzeichnet, dass** Erfassungsmittel so vorgesehen und konstruiert sind, um zu erkennen, dass die zweiten Federmittel (14) sich während des Zurückziehens des Stößels (15) durch die manuelle Kraft (F) in ihrem komprimierten Zustand befinden, und um die ersten Federmittel (9) dazu zu aktivieren, den Schnapphaken (10) entlang der Verriegelungsrichtung (8) in den Hohlraum des Gegenstands (2) zu drücken, wobei die zweiten Federmittel (14) sich in ihrem komprimierten Zustand befinden.

12. Verfahren zum Halten eines Gegenstands (2) mit einer Haltevorrichtung (1), **dadurch gekennzeichnet, dass** eine Haltevorrichtung (1) gemäß einem der Ansprüche 1 bis 11 verwendet wird, die den Gegenstand (2) von einem Behälter (3) durch Auszieh-/Einziehmittel (12) aus einem ersten zurückgezogenen Zustand der Auszieh-/Einziehmittel (12) in einen zweiten ausgefahrenen Zustand der Auszieh-/Einziehmittel (12) herauszieht und/oder den Gegenstand (2) in den Behälter (3) durch die Auszieh-/Einziehmittel (12) aus dem zweiten ausgefahrenen Zustand der Auszieh-/Einziehmittel (12) in den ersten zurückgezogenen Zustand der Auszieh-/Einziehmittel (12) zurückzieht.

13. Verfahren gemäß Anspruch 12, **dadurch gekennzeichnet, dass** die Aktivierungsmittel erstens den zweiten Formgedächtnislegierungsdraht (17) aktivieren, zweitens den ersten Formgedächtnislegierungsdraht (13) aktivieren, drittens den Gleichstrom an dem zweiten Formgedächtnislegierungsdraht (17) stetig reduzieren, bis die Auszieh-/Einziehmittel (12) sich in ihrem zweiten ausgefahrenen Zustand befinden, und viertens den ersten Formgedächtnislegierungsdraht (13) deaktivieren, während der Gegenstand (2) aus dem Behälter (3) herausgezogen wird und die Auszieh-/Einziehmittel (12) aus ihrem ersten zurückgezogenen Zustand in ihren zweiten ausgefahrenen Zustand bewegt werden.

14. Verfahren gemäß Anspruch 12, **dadurch gekennzeichnet, dass** die Aktivierungsmittel erstens den ersten Formgedächtnislegierungsdraht (13) aktivieren, zweitens den zweiten Formgedächtnislegierungsdraht (17) aktivieren, während die Aktivierungsmittel den Gleichstrom an dem zweiten Formgedächtnislegierungsdraht (17) stetig reduzieren, bis die Auszieh-/Einziehmittel (12) sich in ihrem ersten zurückgezogenen Zustand befinden, drittens den ersten Formgedächtnislegierungsdraht (13) deaktivieren und viertens den zweiten Formgedächtnislegierungsdraht (17) deaktivieren, während der Gegenstand (2) in den Behälter (3) zurückgezogen wird und die Auszieh-/Einziehmittel (12) aus ihrem zweiten ausgefahrenen Zustand in ihren ersten zurückgezogenen Zustand bewegt werden.

## Revendications

1. Dispositif de maintien (1) servant à maintenir un objet (2), comprenant un réceptacle (3) ayant une extrémité avant (4) et une extrémité arrière (5), conçu pour recevoir l'objet (2), des premiers moyens de maintien (7) au niveau de l'extrémité avant (4) du réceptacle (3), des seconds moyens de maintien (6) au niveau de l'extrémité arrière (5) du réceptacle (3), un premier fil en alliage à mémoire de forme (13) et un second fil en alliage à mémoire de forme (17) étant actionnés par application d'une alimentation électrique sur ces derniers, dans lequel le premier fil en alliage à mémoire de forme (13) et le second fil en alliage à mémoire de forme (17) présentent une longueur définie à des températures inférieures à une plage de températures de transition, et une longueur contractée réduite à des températures supérieures à la plage de températures de transition, **caractérisé en ce que**
- le premier fil en alliage à mémoire de forme (13) est conçu et produit pour déplacer les premiers moyens de maintien (7) le long d'une direction de verrouillage (8), dans lequel le premier fil en alliage à mémoire de forme (13) est fixé aux premiers moyens de maintien (7) par sa première extrémité (18) et à une première fixation (19) par sa seconde extrémité (20), et dans lequel les premiers moyens de maintien (7) sont conçus pour verrouiller et pour déverrouiller l'objet (2) dans le réceptacle (3) dans un premier état rétracté de moyens d'extension/rétractation (12),
- le second fil en alliage à mémoire de forme (17) est conçu et fabriqué pour déplacer les moyens d'extension/rétractation (12) au niveau de l'extrémité avant (4) du réceptacle (3) le long d'une direction d'extension/rétractation (16), disposés essentiellement de manière orthogonale à la direction de verrouillage (8), dans lequel le second fil en alliage à mémoire de forme (17) est fixé aux moyens d'extension/rétractation (12) par sa première extrémité (21) et à une seconde fixation (22) par sa seconde extrémité (23), et dans lequel les moyens d'extension/rétractation (12) sont conçus et produits pour étendre l'objet (2) du premier état rétracté des moyens d'extension/rétractation (12) à un second état extrait des moyens d'extension/rétractation (12), et/ou pour rétracter l'objet (2) du second état extrait des moyens d'extension/rétractation (12) au premier état rétracté des moyens d'extension/rétractation (12).

2. Dispositif de maintien (1) selon la revendication 1, **caractérisé en ce que** les premiers moyens de maintien (7) comprennent un mousqueton (10) et des premiers moyens à ressort (9), qui sont conçus pour pousser le mousqueton (10) dans une cavité (11) de l'objet (2) le long de la direction de verrouillage (8), et dans lequel le premier fil en alliage à mémoire de forme (13) est conçu pour rétracter le mousqueton (10) le long de la direction de verrouillage (8) pendant que les moyens d'extension/rétractation (12) sont entre leur premier état rétracté et leur second état rétracté et que les premiers moyens à ressort (9) sont entre leur état relâché et leur état comprimé.

3. Dispositif de maintien (1) selon la revendication 1 ou la revendication 2, **caractérisé en ce que** les moyens d'extension/rétractation (12) comprennent un vérin (15) et des seconds moyens à ressort (14), qui sont conçus pour pousser le vérin (15) vers l'objet (2) le long de la direction d'extension/rétractation (16), et dans lequel le second fil en alliage à mémoire de forme (17) est conçu pour rétracter le vérin (15) le long de la direction d'extension/rétractation (16) pendant que les moyens d'extension/rétractation (12) sont entre leur premier état rétracté et leur second état étendu et que les seconds moyens de ressort (14) sont entre leur état relâché et leur état comprimé.

4. Dispositif de maintien (1) selon l'une quelconque des revendications 1 à 3, **caractérisé en ce que** le premier fil en alliage à mémoire de forme (13) et le second fil en alliage à mémoire de forme (17) sont constitués d'alliage à mémoire de forme unidirectionnel, en particulier d'un alliage de nickel/titane, dans lequel une contraction maximale représente environ deux à cinq pour cent de la longueur définie, et dans lequel la plage de températures de transition est comprise entre moins 150 et 250 degrés Celsius, de préférence entre 140 et 200 degrés Celsius, et idéalement entre 160 et 180 degrés Celsius.

5. Dispositif de maintien (1) selon l'une quelconque des revendications 1 à 4, **caractérisé en ce que** la première extrémité (18) et la seconde extrémité (20) du premier fil en alliage à mémoire de forme (13) et la première extrémité (21) et la seconde extrémité (23) du second fil en alliage à mémoire de forme (17) sont reliées respectivement soit à un pôle positive soit à un pôle négatif d'une ligne d'alimentation flexible, dans lequel la ligne d'alimentation flexible est reliée à une alimentation en courant continu et dans lequel les moyens d'activation sont conçus et produits pour activer et pour désactiver l'alimentation en courant continu.

6. Dispositif de maintien (1) selon la revendication 5, **caractérisé en ce que** l'alimentation en courant continu est conçue pour fournir un courant continu ajustable, dans lequel le premier fil en alliage à mémoire de forme (13) et le second fil en alliage à mémoire de forme (17) sont conçus pour ajuster leur contraction proportionnellement audit courant continu fourni, pour permettre une extraction et une rétractation commandées du mousqueton (10) et/ou du vérin (15).

7. Dispositif de maintien (1) selon la revendication 5 ou la revendication 6, **caractérisé en ce que** pendant que les moyens d'extension/rétractation (12) passent de leur premier état rétracté à leur second état étendu, les moyens d'activation sont conçus premièrement pour activer le second fil en alliage à mémoire de forme (17), deuxièmement pour activer le premier fil en alliage à mémoire de forme (13), troisièmement en particulier pour réduire progressivement le courant continu au niveau du second fil en alliage à mémoire de forme (17) jusqu'à ce que les moyens d'extension/rétractation (12) soient dans leur second état étendu, et quatrièmement pour désactiver le premier fil en alliage à mémoire de forme (13) et le second fil en alliage à mémoire de forme (17).

8. Dispositif de maintien (1) selon les revendications 5 à 7, **caractérisé en ce que** pendant que les moyens d'extension/rétractation (12) passent de leur second état étendu à leur premier état rétracté, les moyens d'activation sont conçus premièrement pour activer le premier fil en alliage à mémoire de forme (13), deuxièmement pour activer le second fil en alliage à mémoire de forme (17), tandis que les moyens d'activation sont conçus en particulier pour augmenter progressivement le courant continu au niveau du second fil en alliage à mémoire de forme (17) jusqu'à ce que les moyens d'extension/rétractation (12) soient dans leur premier état rétracté, troisièmement pour désactiver le premier fil en alliage à mémoire de forme (13), et quatrièmement pour désactiver le second fil en alliage à mémoire de forme (17).

9. Dispositif de maintien (1) selon l'une quelconque des revendications 1 à 8, **caractérisé en ce que** la longueur définie du premier fil en alliage à mémoire de forme (13) et du second fil en alliage à mémoire de forme (17) représentent respectivement environ 20 à 25 fois leur contraction maximale, dans lequel le premier fil en alliage à mémoire de forme (13) et/ou le second fil en alliage à mémoire de forme (17) sont guidés autour de poulies (24).

10. Dispositif de maintien (1) selon l'une quelconque des revendications 3 à 9, **caractérisé en ce que** dans le cas où une force manuelle (F) supérieure à la force des seconds moyens de ressort (14) est fournie, les moyens d'activation sont conçus et produits pour activer le premier fil en alliage à mémoire de forme (13) pour rétracter le mousqueton (10) le long de la direction de verrouillage (8) pendant que les moyens d'extension/rétractation (12) sont entre leur second état étendu et leur premier état rétracté, et pendant que les seconds moyens de ressort (14) sont entre leur état relâché et leur état comprimé.

11. Dispositif de maintien (1) selon la revendication 10, **caractérisé en ce que** des moyens de détection sont fournis et conçus pour détecter les seconds moyens de ressort (14) étant dans leur état comprimé au cours de la rétractation du vérin (15) par la force manuelle (F) et pour activer les premiers moyens de ressort (9) conçus pour pousser le mousqueton (10) dans la cavité de l'objet (2) le long de la direction de verrouillage (8), dans lequel les seconds moyens de ressort (14) sont dans leur état comprimé.

12. Procédé de maintien d'un objet (2) avec un dispositif de maintien (1) **caractérisé en ce qu'un** dispositif de maintien (1) selon l'une quelconque des revendications 1 à 11 est utilisé et étend l'objet (2) à partir d'un réceptacle (3) par des moyens d'extension/rétractation (12) d'un premier état rétracté des moyens d'extension/rétractation (12) à un second état étendu des moyens d'extension/rétractation (12), et/ou rétracte l'objet (2) dans le réceptacle (3) par les moyens d'extension/rétractation (12) du second état étendu des moyens d'extension/rétractation (12) au premier état rétracté des moyens d'extension/rétractation (12).

13. Procédé selon la revendication 12, **caractérisé en ce que** pendant que l'objet (2) est étendu à partir du réceptacle (3) et que les moyens d'extension/rétractation (12) passent de leur premier état rétracté à leur second état étendu, les moyens d'activation premièrement activent le second fil en alliage à mémoire de forme (17), deuxièmement activent le premier fil en alliage à mémoire de forme (13), troisièmement réduisent progressivement le courant continu au niveau du second fil en alliage à mémoire de forme (17) jusqu'à ce que les moyens d'extension/rétractation (12) soient dans leur second état étendu, et quatrièmement désactivent le premier fil en alliage à mémoire de forme (13).

14. Procédé selon la revendication 12, **caractérisé en ce que** pendant que l'objet (2) est rétracté dans le réceptacle (3) et que les moyens d'extension/rétractation (12) passent de leur second état étendu à leur premier état rétracté, les moyens d'activation premièrement activent le premier fil en alliage à mémoire de forme (13), deuxièmement activent le second fil en alliage à mémoire de forme (17), tandis que les moyens d'activation augmentent progressivement le courant continu au niveau du second fil en alliage à mémoire de forme (17) jusqu'à ce que les moyens d'extension/rétractation (12) soient dans leur premier état rétracté, troisièmement désactivent le premier fil en alliage à mémoire de forme (13), et quatrièmement désactivent le second fil en alliage à mémoire de forme (17).
